(19) Europäisches Patentamt
European Patent Office
Office européen des brevets

(11) **EP 4 075 057 A1**

(12) **EUROPEAN PATENT APPLICATION**

(43) Date of publication:
**19.10.2022 Bulletin 2022/42**

(21) Application number: **22167128.2**

(22) Date of filing: **07.04.2022**

(51) International Patent Classification (IPC):
**F22B 35/18** (2006.01)    **F22B 37/47** (2006.01)

(52) Cooperative Patent Classification (CPC):
**F22B 37/47; F22B 35/18**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.04.2021 GB 202105430**

(71) Applicant: **Centrica Hive Limited
Berkshire SL4 5GD (GB)**

(72) Inventors:
• **VETTIGLI, Giuseppe
Windsor, SL4 5GD (GB)**
• **HAMOUZ, Miroslav
Windsor, SL4 5GD (GB)**

(74) Representative: **Cole, Douglas Lloyd et al
Mathys & Squire
The Shard
32 London Bridge Street
London SE1 9SG (GB)**

(54) **DETERMINATION OF A FAULT STATUS OF A BOILER**

(57)    This invention relates, but is not limited to, a method, a device, a computer program product and/or apparatus for performing diagnostics or fault determination of the operation of a boiler. The invention determines the fault status of the boiler by determining cold flow events in the time series output temperature data of the boiler and using the electrical energy data of the boiler in a time window of the cold flow event to determine the fault status based on a model. The invention further comprises a method of obtaining the model.

Fig. 3

**Description**

This invention relates, but is not limited to, a method, a device, a computer program product and/or apparatus for diagnostics or fault determination of the operation of a boiler.

Boilers are used to provide heated water in homes and other buildings. The heated water is commonly provided for domestic usage, such as shower and kitchen water as well as being used to provide heating, for example through radiators. Boilers commonly use gas or electricity as a heating source and their usage can form a large portion of a domestic energy usage. There are different types of boilers. A combination or 'combi' boiler is both a water heater and a central heating boiler in a single compact unit. Combi boilers heat water directly from the mains when activated. This removes the need for a hot water storage cylinder or a cold water storage tank.

Although the basic operation of boilers is widely known, boilers are becoming increasingly complex and may have multiple ways of operating, or operation modes, which can operate dependent on the demand for heated water, instructions from a controller or the settings of the boiler. In modern boilers, the mode of operation of the boiler and any operation faults may be available through a control panel. However, users are often not aware of the mode or fault because they do not closely monitor their boiler and a faulty boiler may still produce hot water for some time period. The reporting or raising of a fault is commonly different depending on the boiler, because there is a large range of different models and manufacturers. Furthermore, proprietary systems or codes may be used which limit the ability of a user to identify or interpret the mode or fault of the boiler.

US20140222366 shows an apparatus and method for monitoring and analysing the performance of a heating and cooling system. It shows the use of temperature sensors on the inflow and return temperatures on the pipes of a heat plant or boiler, which are described as indicating the relative performance of a boiler, or if the radiators are balanced. This relies on a comparison between the two temperatures.

EP3117566 shows a method for determining a state of operation of a domestic appliance in which time series data is obtained over a cycle of operation of the domestic appliance. The state of operation is then determined by comparing this time series data to an expected model of time series data of a plurality of domestic appliances. This system determines a current operation of the boiler, such as whether the boiler is in a burn state, based on pattern matching to particular boiler action. A current operation describes what the boiler is doing at each time (e.g. ignition flame), rather than a mode of operation which the boiler may be in for a period of time.

US9638436 shows a method of monitoring HVAC performance remotely by measuring an aggregate current supplied to the HVAC system and determining a failure based on the current data. This uses careful analysis of aggregate current readings to determine and assess operation of individual components of the HVAC systems. Disaggregation of energy signals is often complex and may result in situations where it is not possible to identify particular components.

Embodiments of the invention seek to provide approaches for allowing detection of faults or boiler failures.

Accordingly, in a first aspect of the invention, this is provided a method of building a model for detecting the fault status of boilers, the method comprising the steps of:

receiving a plurality of training data sets for a plurality of boilers, each training data set comprising a time series of electrical energy data of the plurality of boilers and a corresponding time series of outlet temperature data of the plurality of boilers,

identifying one or more cold flow events in each of the time series of outlet temperature data,

selecting a time window in the corresponding time series of electrical energy data, the time window coinciding with identified cold flow event,

identifying a fault status of each of the selected time windows,

determining a measure of dependence between the fault status and the time series of electrical energy data, and

creating a model based on the determined measure of dependence, wherein the model is configured to determine the presence of a fault based on the time series of electrical energy data preceding a cold flow event.

Corresponding time series means that the time series cover the same, or a subset of the same time periods. This provides an association between the electrical energy data and the outlet temperature data, so that the outlet temperature data can be used to identify key periods in the electrical energy data where clear fault status decisions can be made. The method then selects a time window in the temperature data and identifying cold flow events in this time period, wherein the same or preferably an overlapping (in whole or part) time window is selected in the electrical energy data. The model is trained on the basis of fault status in each of the electrical energy data time windows. This provides a model which links the fault status of the boiler (e.g. faulty, pre-fault or normal) to the electrical energy data in a time window around a cold flow event. This provides a more accurate measure of the fault status that the electrical energy data alone because it limits the potentially complex electrical energy signals that need to be processed.

Preferably the steps of identifying the fault status and identifying the one or more cold flow events comprise at least one of:

outputting to a human operator a visual representation of each of the training data sets; and receiving an input from the human operator indicative of the cold flow events and fault status.

Alternatively the steps of identifying the fault status and identifying the one or more cold flow events comprises at least one of:

outputting to a human operator a visual representation of each of the time series of outlet temperature data; and receiving an input from the human operator indicative of a cold flow event; and
obtaining control data from the plurality of boilers which identifies the fault status.

The fault status of the training data may be applied by a skilled human operator to allow the automated learning of the model, for instance by reviewing the time series information in the training data and identifying times faulty behaviour associated with cold flow events. It is also possible that this information would be associated with the time series data, for instance by being collected from the boiler controller when collecting the data, available through a smart controller, or otherwise obtained.

Preferably the time window of the electrical energy data includes the time window of the cold flow event. More preferably the time window of the electrical energy data is larger than the time window of the cold flow event. More preferably the time window of the electrical energy data and the cold flow event have the same end time.

Preferably the model comprises a decision tree. Preferably the model comprises a measure of how constant or stable the electrical energy data is during the time period.

Preferably the model is configured to determine the presence of a fault based on the time series of electrical energy data preceding a cold flow event and the time series of outlet temperature data, wherein the two time series are combined in a mathematical function. More preferably the mathematical function is a product.

Preferably the model comprises a measure of the relationship between the electrical energy data and the outlet temperature data.

Preferably the model comprises an adjustable confidence threshold. This allows a constructor or user of the model to adjust the accuracy of the system, for instance to reduce the occurrence of false alarms.

Preferably the training data sets are obtained from a plurality of further boilers in a plurality of different locations. Preferably the further boiler information comprises multiple days of use of the plurality of further boilers. The use a wide variety of further boilers over multiple provides a broad training data set for the system and may improve performance. Preferably the training set comprises at least 50, 100 or 200 further boilers and/or time series.

Accordingly, in a second aspect of the invention, there is provided a method for determining a fault status of a boiler, the method comprising the steps of:

Receiving a time series of temperature data of the boiler, the temperature data representing the output temperature from the boiler,
Determining a cold flow event in the temperature data,
Receiving a time series of electrical energy data of the boiler, the time series comprising a time window ending at the cold flow event,
Obtaining a model for determining the fault status of a boiler, the model relating the fault status of a boiler to the electrical energy data of boilers in a time window of a cold flow event, and
Determining the fault status of the boiler operating of the boiler based on the received model and the time series of electrical energy data.

The determination of a cold flow event is used to identify periods where clear identification of fault status can be achieved in the electrical energy data. This is because the electrical energy data is often complex and difficult to effectively disaggregate due to overlap between faulty and normal operation of boilers at different time or operation modes. Cold flow events occur when cold water flows from the boiler output pipe. Cold flow events can, for instance, be caused by a failure in the heating element of the boiler, or a pressurization problem, or may occur as a boiler is beginning operation. A time window of electrical energy data, ending at the point where a cold flow event has been determined is then processed to determine if the boiler is faulty. This restricts the amount of electrical energy data which must be processed to identify the fault. Advantageously the use of cold flow events to indicate time windows for fault status identification in the electrical energy data provides a much narrower range of expected electrical energy data, allowing for the construction and use of a more accurate model. This is because cold flow events are both reasonably frequent and are often associated with a clear boiler activation signals, or attempted signals, in the electrical energy data.

Preferably the model is created according to the first aspect.

A cold flow event occurs where there is a decrease in the outlet pipe temperature. This occurs when water (which may be ambient water temperature, or temperature beneath a base or expected temperature in the outlet pipe) leaves the boiler before it has been heated. It commonly occurs when the boiler is initially activated to deliver hot water (for instance a hot water faucet being opened) because there is a delay in the activation of the boiler element. This means that the temperature signal indicates that the outlet pipe is unusually cold, generally because water has passed through the boiler without heating, or without heating as much as usual.

Preferably the cold flow event is determined through a comparison of the shape of the temperature data with an expected shape function. Preferably the comparison comprises a classification. More preferably the classification uses the KNN (K-nearest neighbours) algorithm or a Random Forests algorithm. The expected shape function may comprise a cold stream range, wherein a cold flow event is determined when the temperature data remains within the cold stream range.

Preferably the method comprises the step of normalising the temperature data. More preferably it is normalised to the average temperature of the data. Normalising the temperature data reduces the impact of different starting temperatures across the temperature data sets, this enables an improved comparison between temperature data, for instance to determine cold flow events.

Preferably the method comprises the step of selecting or obtaining a time window of temperature data. Preferably the time window is a rolling time window, such that a constant length of temperature data is provided. Preferably the time window is less than 10 minutes, more preferably less than 8 minutes and most preferably 5 minutes.

Alternatively the cold flow event is determined by a measure of the gradient of the temperature data. Preferably the cold flow event is determined by a comparison of the temperature data to a reference temperature, such as a base temperature. The base temperature may be a pre-set value, or may be estimated from historical temperature data. More preferably the cold flow event is determined by a combination of the gradient of the temperature data and the comparison of the temperature data to a reference temperature. Preferably the cold flow event is determined by repeated application of the comparison(s).

This alternative method (although it may be used in conjunction with the earlier method) of determining a cold flow event determines a gradient (or rate of change) of the temperature data. This is effective because a negative gradient indicates that the water in the pipe is getting colder and a large negative gradient suggests this is not simply due to cooling of the pipe. A comparison to a reference temperature, such as the ambient or a defined base level temperature, improves performance because it ensure that the decrease in temperature is from a relatively low temperature, removing false alarms due to high rates of cooling (large gradients) due to high temperature cooling.

Preferably the method comprises a first stage to determine the cold flow event and a second stage to determine the fault status, wherein the second stage is only activated or performed when a cold flow event is detected.

Through the use of a first stage in which a cold flow event is identified and a second stage in which the electrical energy is examined for a time window prior to the cold flow event occurring the processing requirements can be reduced, because the electrical energy is only processed when a fault can be detected.

Preferably the electrical energy time window is less than 20 minutes, more preferably less than 10 minutes, more preferably 3-8 minutes, most preferably 8 minutes.

Preferably the electrical energy data comprises current data and/or voltage data.

Preferably the model comprises a decision tree. Preferably the model calculates statistical features of the electrical energy time series. Preferably the statistical features comprise any one or more of the sum, mean, variance, skewness, or other statistical moments.

More preferably the statistical features comprise the sum and the first five statistical moments. Preferably the decision tree uses the statistical features and the electrical energy time series.

Preferably the model calculates a measure combining the temperature time series and electrical energy time series data. Preferably the combination is a mathematical function of the temperature and electrical energy time series data, where the product or sum is calculated for each matching time point in the temperature and electrical energy time series data. Preferably the mathematical function is a product or sum.

Preferably the boiler is a combination boiler (or combi-boiler). A combi boiler provides heat on demand by a combination of a water heater and central heating boiler in one unit. This reduces or removes the need for a hot water storage tank.

Any feature in one aspect of the invention may be applied to other aspects of the invention, in any appropriate combination. In particular, method aspects may be applied to system, apparatus and computer program aspects, and vice versa.

Furthermore, features implemented in hardware may generally be implemented in software, and vice versa. Any reference to software and hardware features herein should be construed accordingly.

Preferred features of the present invention will now be described, purely by way of example, with reference to the accompanying drawings, in which:

Figure 1 illustrates a system diagram of a monitoring system suitable for a boiler.
Figure 2 illustrates example sensor measurements from three boilers.
Figure 3 is a flow chart of the stages in an embodiment.
Figure 4 illustrates a method of detecting cold flow events.
Figure 5 illustrates an alternative method of detecting cold flow events.
Figure 6 illustrates an embodiment of training the model.
Figure 7 illustrates further example sensor measurements.

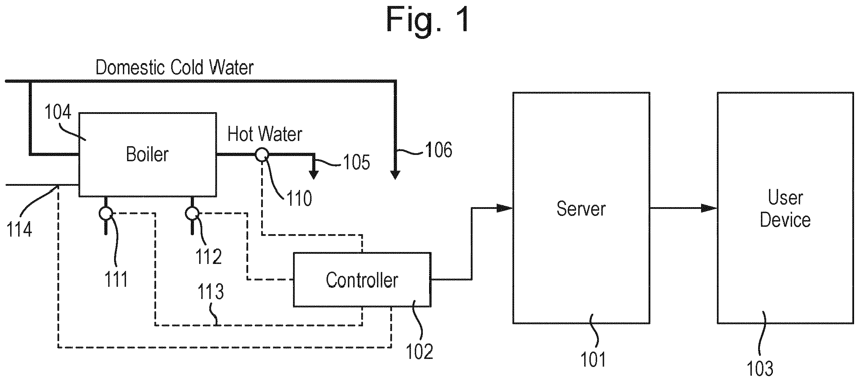

Figure 1 shows a monitoring system for a boiler 104. The boiler 104 receives water from a domestic cold water supply 106 and produces a hot water output 105.

The boiler is also connected to a central heating system through outlet and return pipes which may lead to a radiator (not shown). The skilled person would understand variations in the boiler design and operation are possible, including further features and boilers which do not feed radiators directly. For instance, different boiler types may have a hot water output 105 which feeds directly to a domestic supply or may feed into a hot water storage tank.

The monitoring system of Figure 1 includes sensors attached to system components. Heating outlet sensor 111 and heating return sensor 112 may be temperature sensors configured to identify a change in temperature of the pipe indicating the presence of a flow. Similarly, hot water sensor 110 associated or attached to hot water output 105 may be a temperature sensor indicating flow of hot water from the boiler 104. The sensors 111,112,110 may alternatively be other sensors capable of measuring flow or related phenomena (e.g. temperature), able to indicate operation or amount of operation of the boiler or fluid flow. For instance, audio sensors, flow sensor or electromagnetic sensors may be used. Electrical energy sensor 114 is attached or associated with a power connection of the boiler 104 and is configured to detect the amount of electrical energy being used by the boiler. The electrical energy sensor 114 may be a current sensor or voltage sensor, or other suitable means for measuring electrical energy. Preferably the electrical energy sensor 114 is a current sensor or a voltage sensor. Preferably at least one, or all the sensors are attachable to the boiler, for example by clipping on to or grasping the wire/pipe they measure. In this way the system may easily be retrofitted to a boiler.

The sensors are preferably able to communicate with a controller 102. The controller 102 may be a microcontroller or other control device. It is preferably connected to the sensors by a connection means 113 which may be wired (e.g. a wire) or wireless (e.g. Bluetooth™ or Zigbee™) for each sensor. In many cases it is preferably wired to allow the controller to power the sensors. The controller 102 is preferably linked to a server 101 (either directly or through one or more intermediate devices), with which it may communicate wired or wirelessly. The server may also be in communication with a user device 103 this is typically using the internet, although it is also possible a user device would connect on a local area network (including to the controller or an intermediary device such as a hub). The user device 103, (for instance a personal electronic device such as a mobile telephone or smart, or other user interactive device) may allow a user to interact with the controller and/or to send instructions to the controller and/or to receive notifications from the controller, for instance regarding a diagnostic problem or a determined mode of operation. The notification may be by text message or notification in an application on the user device 103. The notification may prompt the user to take an action to control the boiler, or may inform the user of an action already taken by a boiler controller. Alternatively the server may control, or send instructions to, the boiler directly based on a fault determination.

The server will typically include other conventional hardware and software components as known to those skilled in the art. While a specific architecture is shown by way of example and specific software technologies and vendors have been mentioned, any appropriate hardware / software architecture may be employed. Functional components indicated as separate may be combined and vice versa. For example, the functions of server 101 may in practice be implemented by multiple separate server devices, e.g. by a cluster of servers.

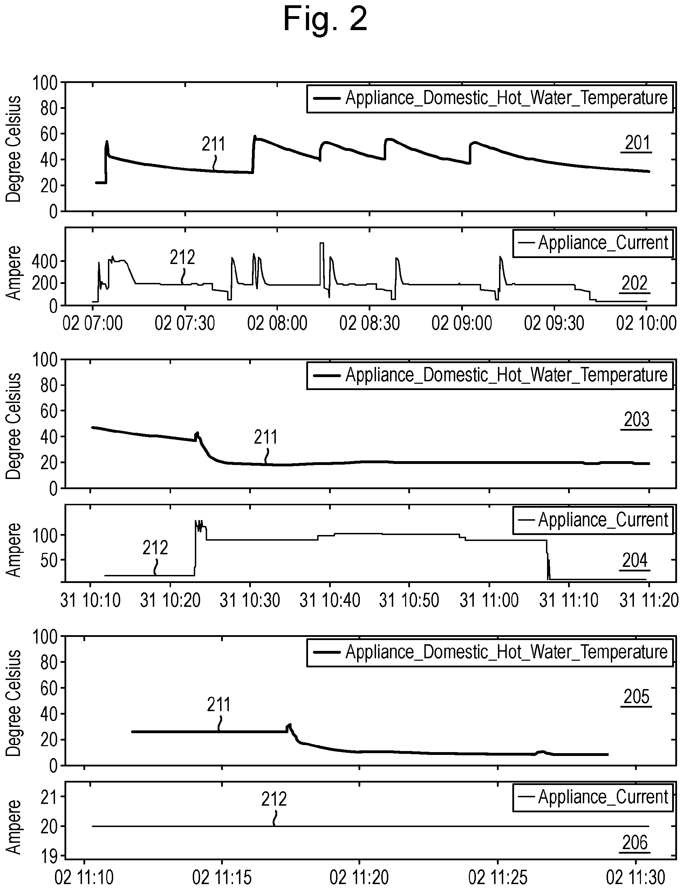

Figure 2 shows example time series data obtained from a system such as that shown in Figure 1. Three sets of data are shown, each with temperature (201, 203, 205) and current portions (202, 204, 206). Looking at the top two portions 201 and 202 normal operation of a boiler is shown. When electrical energy 212 is applied to the boiler (as demonstrated by the presence or peak of a current) the outlet temperature 211 increases (as heated water is being drawn from the boiler). When no current is being supplied there is a decay in temperature to an ambient or base level of temperature. However, even in this simple example unrelated electrical events occur, such as the current spike at approximately 7.45 which has no impact on the outlet temperature. Plots 203 and 204 demonstrate a faulty boiler, in this case where there is no ignition. The temperature line shows an initial decay in temperature as would be expected, however once there is a peak in the current the outlet temperature 211 decreases relatively quickly and does not recover. The current line maintains a constant current as it is not able to activate the boiler. Therefore, these plots (203, 204) are indicative of a boiler which is not able to ignite. Plots 205 and 206 also demonstrate a faulty boiler, but in this case the fault is low pressure. The initial temperature plot is substantially constant at a base or ambient temperature because there is an obstruction in the flow of gas. This meant that while electrical energy use was high, attempting to activate the boiler, no hot water was produced. It is noted by the applicants that these examples are used to explicitly show faulty boilers. In typical operations the temperature and electrical current data can be much more complicated and potential faults may only be intermittent.

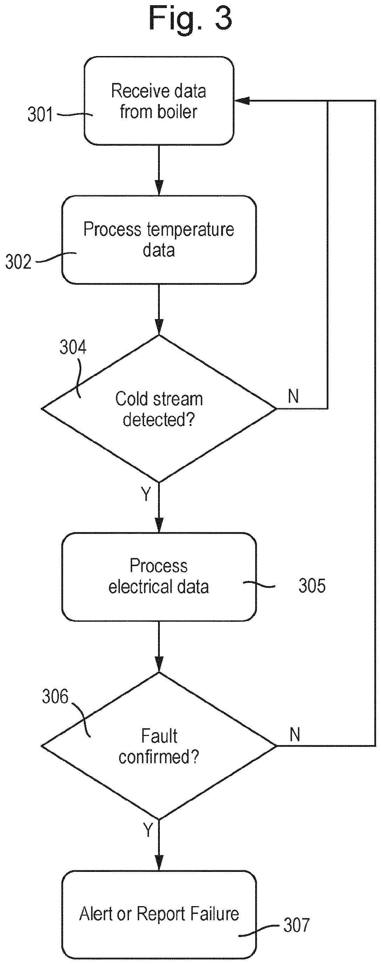

Figure 3 shows a flow diagram of a preferred operation of the system. In particular the flow chart shows a two stage process for identifying the fault or fault status of the boiler. It is possible that the stages could be combined: for example by monitoring the cold stream detection and electrical data fault concurrently, however this is likely to increase the processing required by the system. The two stage method has a first step of receiving information from a boiler 301, preferably using a system as shown in figure 1, although it would also be possible to obtain the data from a stored resource, over a network or from other devices, including proprietary devices.

The method first processes the temperature data 302. this processing of the temperature data may include a normalisation to make comparison with historical data easier and more accurate, as well as a windowing. Windowing the data (selecting a specified time length of data within the data received from the boiler) provides a fixed length of data which allows easier comparison with historical or comparative data. Preferably the windowing is achieved by building a vector each time a new temperature sample arrives, wherein the new temperature data is added to the vector and the oldest temperature data is removed, maintaining the fixed length of the temperature data.

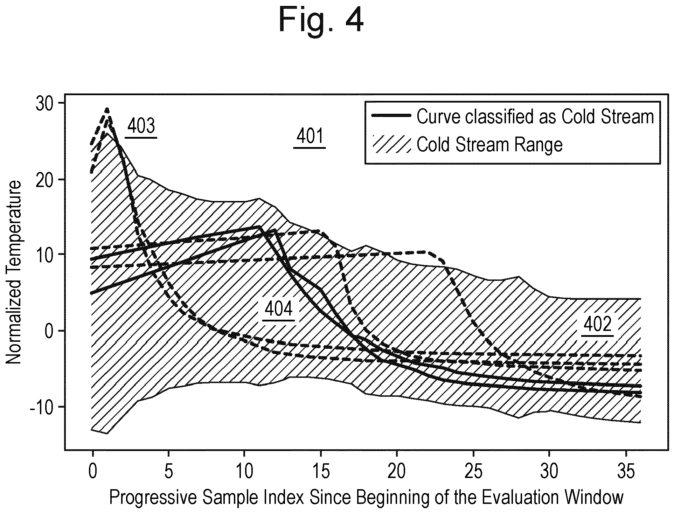

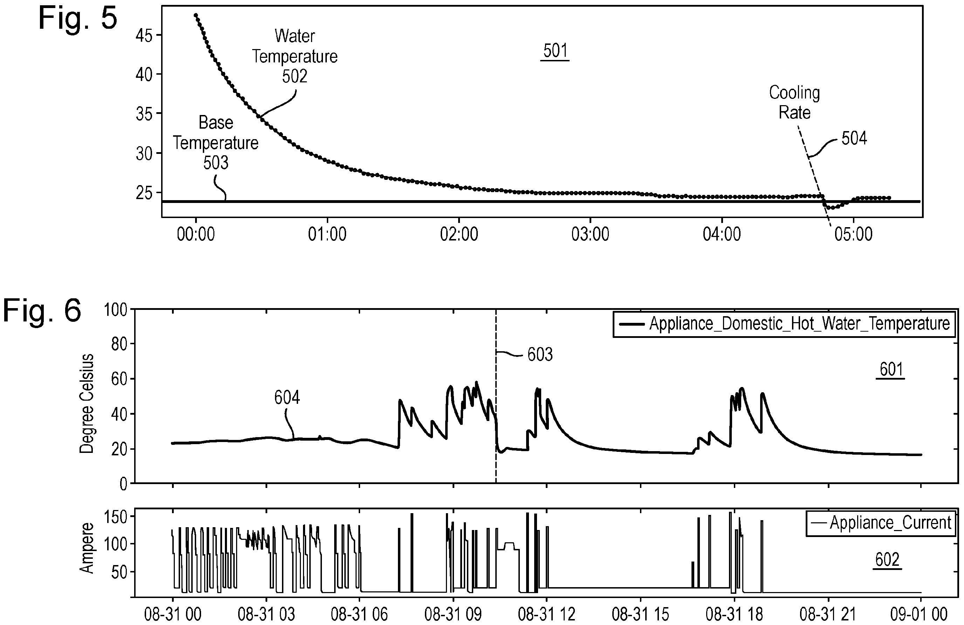

The method then determines if a cold stream event 304 has occurred in the temperature data. This requires processing the temperature data to identify a cold stream event, methods may include shape matching as described below in relation to figure 4, or gradient observation as described below in relation to figure 5. If no cold stream event is found in the temperature data the method returns to the beginning and waits for further data from the boiler, at which point the process can proceed again. This first stage or step of the method increases efficiency because it reduces the amount of the further data, such as the electrical data, which has to be processed. If a cold stream is detected the method moves on to process the electrical energy data 305, as it uses this step to differentiate between expected or normal cold stream events and cold stream events indicative of a faulty boiler.

The processing of the electrical data preferably includes a windowing similar to the temperature data. However, the selected window is preferably longer than the temperature window, such that the electrical data extends further back in time, since relevant electrical activity often precedes any flow of water from the boiler. The reference of the length of time of the window is preferably from the end of the window (e.g. the last temperature reading) as this represents the most up-to-date reading. In a preferred system a five minute temperature window is used and an eight minute current window, where the current window therefore covers a three minute period before the temperature window begins. In other embodiments the overlap between the windows is not complete, for instance the current window may cover a five minute period beginning two minutes before the start of the five minute temperature window and finishing three minutes into the temperature window.

The method then determines if a fault has occurred in the boiler 306, i.e. that the boiler operation is abnormal. This step preferably provides a classifier which classifies the boiler into two or more states or categories including faulty and non-faulty or normal. It may also be able to classify potentially faulty states, such as when performance degradation is found. In a preferred example a decision tree algorithm is used. A decision tree algorithm allows the program to make a fault status decision through a series of decisions steps (e.g. working from the trunk to the branches of the decision tree). In a preferred example the output from the decision tree is expressed as a probability or on a data range. For example, the output may be a number between 0 and 1, where 1 is a definite failure and 0 is normal operation, allowing for an accuracy of specificity of the detection to be controlled. If no fault is determined the process returns to the beginning and waits for further data from the boiler, at which point the process can repeat.

The method is then able to report the failure 307 or raise an alert of the problem. The alert may be an audio/visual alert to the homeowner such as a bell or flashing light. Alternatively, or in combination, the alert may be sent to a device, either directly or over a network. The device may be a personal electronic device such as a mobile phone. In a further embodiment the alert may be sent to a central controller or monitoring system who can contact the boiler owner or dispatch a suitable repair person. The method may also include a direct instruction to the boiler, for instance to pause operation until authorised by a user, or the problem is fixed. This may help reduce boiler failure by stopping operation before further damage occurs.

The decision tree preferably acts on a vector of a window of the current measurements. The decision tree preferably also looks at combinations or mathematical combinations of the current measurements, these may include the statistical moments of the vector, such as the first five statistical moments and/or the sum of the Current measurements, as well as the current measurements themselves. In further embodiments the temperature vector is also used, including the statistical moments of the temperature vector (and preferably also the temperature vector itself). In a preferred example a combined vector is formed, for instance by combining the temperature and electrical data. In a preferred embodiment this is formed by the product of the temperature and time (preferably normalised), where the product is of the temperature and time values at each common time step.

In a particular embodiment the window of current measurements is represented as the vector $C = (c_k, c_{k-1}, ..., c_{k-N})$, where $c_k$ is the current measured at the timestamp k and the window covers a fixed timespan $L_C$. A second vector which represents the response of the temperature to the current consumption is represented as $R = (c_k t_k, c_{k-1} t_{k-1}, ..., c_{k-N} t_{k-H})$, where H =min(N,M). The goal of the detector is to check if C corresponds to a failure or not. The training data for the decision tree is formed from the set $\{ (C_i, R_i, y_i) \mid y_i \in \{0,1\} \}$ where $y_i$ is set to 1 where the window corresponds to a failure and to 0 otherwise is collected. This allows a statistical classifier (e.g. the decision tree) to be trained to predict $y_i$. The features of C and R include the first 5 statistical moments and the sum of C and all the elements of the vector R.

Figure 4 shows a first method of identifying cold water events. This is achieved by considering the shape of the normalised temperature in a time window and comparing or matching this shape with historical training data for cold water events. Plot 401 shows an example shape matching result. The shaded area 402 represents the area in which cold water events are contained. Curves completely contained in this area 404 are representative of cold water events, whereas curves 403 which pass the boundary represent other flows. The specificity of the algorithm can be controlled by a loosening or tightening of the shaded region. For instance, the shaded region of figure 4 is defined by a distance of two times the standard deviation from the average of failure curves. A more sensitive algorithm could increase this to 3 standard deviations, but would capture more false detections, while a reducing it may miss cold water events. While the present example is illustrated visually it is understood that the process can be performed algorithmically.

In a specific example a temperature window is represented as the vector T = ($t_k$, $t_{k-1}$,..., $t_{k-N}$), where $t_k$ is the temperature at the timestamp $k$ and the window covers a fixed timespan $L_T$. The training or historic data is formed by a set of previous or known examples of cold water events and non cold water events (or normal operation), such that the data provides a set $D = \{ (T_i , y_i) \mid y_i \in \{0,1\} \}$ where $y_i$ is set to 1 where the window corresponds to a certain cold water event and 0 for a certain not cold water event. A statistical classifier $W(T_i)$ is then trained to predict $y_i$. The temperature values are used as predictive features of a process of resampling and normalization. Resampling allows sensor data to be made comparable, for instance by insuring they have the same number of samples, or similarly spaced samples. This addresses problems due to sensors which report on change, rather than sending results at fixed times. Results can, for instance, be achieved with Random Forests trained using Gradient Boosting and/or K-Nearest Neighbours (KNN) and other classification systems may be known. In use the vector T can be reconstructed each time step to add the new temperature value and discard the oldest temperature value. Using the KNN approach T is then compared with each of the historical/annotated vectors in D using a metric distance (for instance the Euclidean distance). If the most similar vector (or closest vector) is a failure then the KNN approach will classify the time window as a failure, otherwise it will move on to the next time point.

Figure 5 shows an alternative method for identifying cold flow events. This is based on the finding that when a cold flow event occurs there is an unexpectedly sudden change in temperature of the outlet pipe from a low temperature point. This is shown in plot 501 whereby looking for high gradient decreases 504 (equivalent to a high cooling rate) in temperature 502 when the temperature is near, at or below a base or reference temperature 503. This is used to avoid confusion caused by large cooling rates when the outlet temperature is very hot (and thus would be expected to cool faster). In a particular embodiment $T_i^d$ is the temperature measured on the outlet water pipe on a window with index d at timestamp i. A base temperature can be defined as temperature defined as

$$b = \min_i T_i^{d-1} \alpha$$

, representing a fraction or multiple (depending on alpha) of the minimum temperature in an expected or previous window. The window for calculating the base temperature may be longer than the comparison window, for instance a 24-hour period. Alternatively, the base temperature may be a predefined value, or a value calculated based on further temperature readings. A cooling rate c can be calculated as a function of the difference between consecutive temperature values:

$$T_i^{d-1} - T_{i-1}^{d-1}$$

. Other methods of calculating the cooling rate or gradient are also available. A cooling event is determined where $T_i^d < b$ and $T_i^d - T_{i-1}^d < c$ for parameters b and c, preferably for $\omega$ consecutive timestamps.

Figure 6 demonstrates the training of a system. As discussed with reference to figure 3 historical or training data is used to build portions of the system to allow automatic detection of boiler faults or fault status. This task is typically performed by a skilled technician or expert who is aware of fault identifications. It requires review of a plurality of historical boiler information and identification of when a fault has appeared in the time series. The system can then select a suitable time window from each of temperature 601 and current plots 602 in relation to the identified fault. These identified time windows then form the training or historical data discussed with reference to figures 4, 5 and 6 and allow construction of each or both stages of the method.

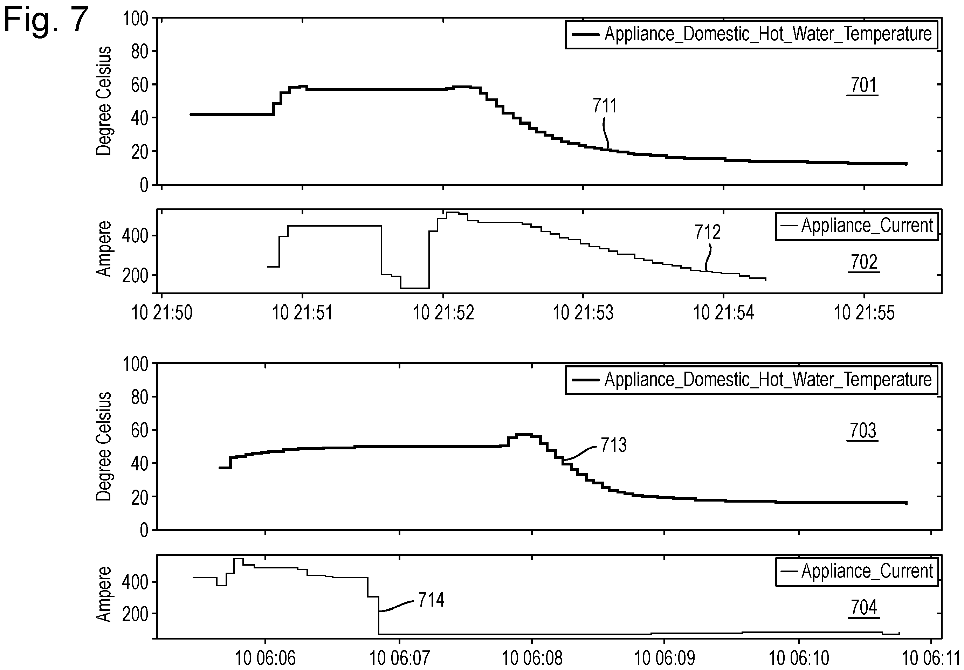

Figure 7 demonstrates more complex examples of identifying faults in boilers. It should be noted that, although complex they have been windowed to focus on particular events and would normally form only part of a larger time series, such as that seen in Figure 6. In plots 701 and 702 the temperature 711 and current 712 are shown for a boiler with irregular current consumption, but correct operation. Similarly plots 703 and 704 showing the temperature 713 and current 714 respectively show a boiler with regular current activity, but with a further cold stream event shortly after normal activity. This is indicative of a short time between water events, rather than boiler failure. The determination of a boiler fault should be able to differentiate between these cases. This may require a complex decision tree, which relies on a large amount of training data. In general terms the decision tree may attempt to determine cases where the current is more stable or consistent than would be expected with a cold flow event. The combination of temperature and electrical data provides added ability to determine more complex cases because they can distinguish unexpected patterns between the data, such as when a large current is having no effect on the water outlet temperature.

Any of the described methods, processes and techniques may be performed by software code executing on processor(s) of one or more processing devices (such as the controller 102 and/or server 101 of Figure 1) having associated memory for storing code and/or data. The software code may be embodied in one or more non-transitory computer readable media storing executable software instructions for execution by the processor(s).

It will be understood that the present invention has been described above purely by way of example, and modification of detail can be made within the scope of the invention.

The above embodiments and examples are to be understood as illustrative examples. Further embodiments, aspects or examples are envisaged. It is to be understood that any feature described in relation to any one embodiment, aspect or example may be used alone, or in combination with other features described, and may also be used in combination with one or more features of any other of the embodiments, aspects or examples, or any combination of any other of the embodiments, aspects or examples. Furthermore, equivalents and modifications not described above may also be employed without departing from the scope of the invention, which is defined in the accompanying claims.

Further aspects and features of the invention are set out in the following numbered clauses.

1. A method of building a model for detecting the fault status of boilers, the method comprising the steps of:

receiving a plurality of training data sets for a plurality of boilers, each training data set comprising a time series of electrical energy data of the plurality of boilers and a corresponding time series of outlet temperature data of the plurality of boilers,
identifying one or more cold flow events in each of the time series of outlet temperature data,
selecting a time window in the corresponding time series of electrical energy data, the time window coinciding with identified cold flow event,
identifying a fault status of each of the selected time windows,
determining a measure of dependence between the fault status and the selected time window of the electrical energy data, and
creating a model based on the determined measure of dependence, wherein the model is configured to determine the presence of a fault based on the time window of electrical energy data preceding a cold flow event.

2. A method as defined in clause 1 wherein the steps of identifying the fault status and identifying the one or more cold flow events comprise at least one of: outputting to a human operator a visual representation of each of the training data sets; and receiving an input from the human operator indicative of the cold flow events and fault status.

3. A method as defined in clause 1 wherein the steps of identifying the fault status and identifying the one or more cold flow events comprises:

outputting to a human operator a visual representation of each of the time series of outlet temperature data;
receiving an input from the human operator indicative of a cold flow event; and
obtaining control data from the plurality of boilers which identifies the fault status.

4. A method as defined in any of clauses 1 to 3, wherein the time window of the electrical energy data includes the time window of the cold flow event, optionally where the time window of the electrical energy data is larger than the time window of the cold flow event.

5. A method as defined in any of clauses 1 to 4 wherein the model comprises a decision tree.

6. A method as defined in clause 5 wherein the model is configured to determine the presence of a fault based on the time series of electrical energy data preceding a cold flow event and the time series of outlet temperature data, wherein the two time series are combined in a mathematical function.

7. A method as defined in any of clauses 1 to 6, wherein the plurality of training data sets are obtained from a plurality of further boilers in a plurality of different locations.

8. A method for determining a fault status of a boiler, the method comprising the steps of:

Receiving a time series of temperature data of the boiler, the temperature data representing the output temperature from the boiler,
Determining a cold flow event in the temperature data,
Receiving a time series of electrical energy data of the boiler, the time series comprising a time window ending at the cold flow event,
Obtaining a model for determining the fault status of a boiler, the model relating the fault status of a boiler to the electrical energy data of boilers in a time window of a cold flow event, and
Determining the fault status of the boiler based on the received model and the time series of electrical energy data.

9. A method as defined in clause 8 wherein the model is built according to the method of any one of clauses 1 to 7.

10. A method as defined in either one of clauses 8 or 9 comprising the step of normalising the temperature data.

11. A method as defined in any of clauses 8 to 10 comprising the step of obtaining a time window of the temperature data, optionally wherein the time window is a rolling time window.

12. A method as defined in any of clauses 8 to 11 wherein the cold flow event is determined through a comparison of the shape of the temperature data with an expected shape function.

13. A method as defined in clause 12 wherein the comparison comprises a classification algorithm, optionally a KNN (K-nearest neighbours) algorithm or a Random Forests algorithm.

14. A method as defined in any of clauses 8 to 11 wherein the cold flow event is determined by a comparison of the temperature data to a reference temperature and/or a measure of the gradient of the temperature data.

15. A method as defined in any of clauses 8 to 14 wherein the method comprises a first stage to determine the cold flow event and a second stage to determine the fault status, wherein the second stage is performed when a cold flow event is detected.

16. A method as defined in any of clauses 8 to 15 wherein the electrical energy time window is less than 20 minutes, more preferably between 3 and 8 minutes.

17. A method as defined in any of clauses 8 to 16 wherein the model comprises a decision tree, optionally where the decision tree uses the electrical energy time series, and the statistical features of the electrical energy time series.

18. A method as defined in any of clauses 8 to 17 wherein the model calculates a measure combining the temperature time series and electrical energy time series data.

19. A method as defined in any of clauses 8 to 18 wherein the electrical energy data comprises electrical current data.

20. A method as defined in any of clauses 8 to 19 wherein the boiler is a combination boiler (combi-boiler).

## Claims

1. A method for determining a fault status of a boiler, the method comprising the steps of:

   receiving a time series of temperature data of the boiler, the temperature data representing the output temperature from the boiler,
   determining a cold flow event in the temperature data,
   receiving a time series of electrical energy data of the boiler, the time series comprising a time window ending at the cold flow event,
   obtaining a model for determining the fault status of a boiler, the model relating the fault status of a boiler to the electrical energy data of boilers in a time window of a cold flow event, wherein the model is based on training data sets of electrical energy data and outlet temperature data of a plurality of boilers; and
   determining the fault status of the boiler based on the received model and the time series of electrical energy data.

2. The method as claimed in claim 1, comprising the step of normalising the temperature data.

3. The method as claimed in claim 1 or 2, comprising the step of obtaining a time window of the temperature data, optionally wherein the time window is a rolling time window.

4. The method as claimed in any of the preceding claims, wherein the cold flow event is determined through a comparison of the shape of the temperature data with an expected shape function, wherein the comparison preferably comprises a classification algorithm, optionally a KNN (K-nearest neighbours) algorithm or a Random Forests algorithm.

5. The method as claimed in any of claims 1 to 3, wherein the cold flow event is determined by a comparison of the temperature data to a reference temperature and/or a measure of the gradient of the temperature data.

6. The method as claimed in any of the preceding claims, wherein the method comprises a first stage to determine the cold flow event and a second stage to determine the fault status, wherein the second stage is performed when a cold flow event is detected.

**7.** The method as claimed in any of the preceding claims, wherein the electrical energy time window is less than 20 minutes, more preferably between 3 and 8 minutes.

**8.** The method as claimed in any of the preceding claims, wherein the model comprises a decision tree, optionally where the decision tree uses the electrical energy time series, and the statistical features of the electrical energy time series.

**9.** The method as claimed in any of the preceding claims, wherein the model calculates a measure combining the temperature time series and electrical energy time series data.

**10.** The method as claimed in any of the preceding claims, wherein the electrical energy data comprises electrical current data.

**11.** The method as claimed in any of the preceding claims, wherein the boiler is a combination boiler (combi-boiler).

**12.** The method as claimed in any of the preceding claims, comprising building the model for detecting the fault status of boilers, the method comprising the steps of:

   receiving the training data sets for the plurality of boilers, each training data set comprising a time series of electrical energy data of the plurality of boilers and a corresponding time series of outlet temperature data of the plurality of boilers,
   identifying one or more cold flow events in each of the time series of outlet temperature data,
   selecting a time window in the corresponding time series of electrical energy data, the time window coinciding with an identified cold flow event,
   identifying a fault status of each of the selected time windows,
   determining a measure of dependence between the fault status and the selected time window of the electrical energy data, and
   creating the model based on the determined measure of dependence, wherein the model is configured to determine the presence of a fault based on the time window of electrical energy data preceding a cold flow event.

**13.** The method as claimed in claim 12, wherein the steps of identifying the fault status and identifying the one or more cold flow events comprise one of:

   outputting to a human operator a visual representation of each of the training data sets and receiving an input from the human operator indicative of the cold flow events and fault status; or
outputting to a human operator a visual representation of each of the time series of outlet temperature data, receiving an input from the human operator indicative of a cold flow event, and obtaining control data from the plurality of boilers which identifies the fault status.

**14.** The method as claimed in claim 12 or 13, wherein the time window of the electrical energy data includes the time window of the cold flow event, optionally where the time window of the electrical energy data is larger than the time window of the cold flow event; and/or wherein the model is configured to determine the presence of a fault based on the time series of electrical energy data preceding a cold flow event and the time series of outlet temperature data, wherein the two time series are combined in a mathematical function.

**15.** A computer program, computer program product or computer readable medium comprising software code for determining a fault status of a boiler, the software code configured, when executed by a processing device, to perform the steps of:

   receiving a time series of temperature data of the boiler, the temperature data representing the output temperature from the boiler,
   determining a cold flow event in the temperature data,
   receiving a time series of electrical energy data of the boiler, the time series comprising a time window ending at the cold flow event,
   obtaining a model for determining the fault status of a boiler, the model relating the fault status of a boiler to the electrical energy data of boilers in a time window of a cold flow event, wherein the model is based on training data sets of electrical energy data and outlet temperature data of a plurality of boilers; and
   determining the fault status of the boiler based on the received model and the time series of electrical energy data.

## Fig. 1

Domestic Cold Water

104

Boiler

Hot Water

105

106

110

114

111

112

113

Controller

102

Server

101

User Device

103

EP 4 075 057 A1

# Fig. 2

# Fig. 3

```
        301 ─┐  ┌──────────────────┐
             └──│  Receive data    │◄──────────────┐
                │  from boiler     │               │
                └──────────────────┘               │
                        │                          │
                        ▼                          │
        302 ─┐  ┌──────────────────┐               │
             └──│ Process temperature│             │
                │      data        │               │
                └──────────────────┘               │
                        │                          │
                        ▼                          │
              304                                  │
                    ╱────────────╲                 │
                   ╱  Cold stream  ╲      N         │
                  ╱   detected?     ╲──────────────┤
                   ╲               ╱                │
                    ╲────────────╱                 │
                        │ Y                         │
                        ▼                          │
                ┌──────────────────┐               │
                │     Process      │               │
                │  electrical data │─── 305        │
                └──────────────────┘               │
                        │                          │
                        ▼                          │
          306 ╲                                    │
                    ╱────────────╲                 │
                   ╱    Fault      ╲      N         │
                  ╱   confirmed?    ╲──────────────┘
                   ╲               ╱
                    ╲────────────╱
                        │ Y
                        ▼
                ┌──────────────────┐
                │ Alert or Report Failure │─── 307
                └──────────────────┘
```

# Fig. 4

Fig. 5

Water Temperature 502

501

Base Temperature 503

Cooling Rate

504

Fig. 6

Appliance_Domestic_Hot_Water_Temperature

603

601

604

Appliance_Current

602

EP 4 075 057 A1

# Fig. 7

701

711

Appliance_Domestic_Hot_Water_Temperature

702

712

Appliance_Current

703

713

Appliance_Domestic_Hot_Water_Temperature

704

714

Appliance_Current

Europäisches
Patentamt

European
Patent Office

Office européen
des brevets

## EUROPEAN SEARCH REPORT

Application Number

EP 22 16 7128

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/266755 A1 (ARENSMEIER JEFFREY N [US] ET AL) 18 September 2014 (2014-09-18) | 1-11,15 | INV.<br>F22B35/18<br>F22B37/47 |
| A | * paragraphs [0069], [0109] – [0114], [0117] – [0120]; figures 2-7 *<br>* paragraphs [0134], [0153], [0158], [0171], [0176], [0177] *<br>* paragraphs [0192], [0196] – [0212], [0216], [0225] – [0227], [0229] *<br>* paragraphs [0253], [0259], [0266], [0270] *<br>----- | 12-14 | |
| A | US 2009/056649 A1 (MACKENZIE BRUCE G [US]) 5 March 2009 (2009-03-05)<br>* paragraphs [0030], [0035] – [0038]; figures 1,3 *<br>----- | 1-15 | |
| A | LI MENGSHI ET AL: "A Data-Driven Method for Fault Detection and Isolation of the Integrated Energy-Based District Heating System",<br>IEEE ACCESS, IEEE, USA,<br>vol. 8, 28 January 2020 (2020-01-28), pages 23787-23801, XP011770554,<br>DOI: 10.1109/ACCESS.2020.2970273<br>[retrieved on 2020-02-04]<br>* the whole document *<br>----- | 1-15 | |
| A | US 2018/373234 A1 (KHALATE SUMANT S [IN] ET AL) 27 December 2018 (2018-12-27)<br>* paragraphs [0043] – [0068]; figures 2,3 *<br>----- | 1-15 | |
| A | US 2004/128111 A1 (LANG FRED D [US]) 1 July 2004 (2004-07-01)<br>* paragraphs [0040] – [0162]; figures 1-3 *<br>----- | 1-15 | |

**TECHNICAL FIELDS SEARCHED (IPC)**

F22B

The present search report has been drawn up for all claims

| Place of search | Date of completion of the search | Examiner |
|---|---|---|
| Munich | 5 September 2022 | Röberg, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 16 7128

05-09-2022

| Patent document cited in search report | Publication date | Patent family member(s) | Publication date |
|---|---|---|---|
| US 2014266755 A1 | 18-09-2014 | AU 2014229103 A1 | 08-10-2015 |
| | | CA 2904734 A1 | 18-09-2014 |
| | | CN 105074344 A | 18-11-2015 |
| | | EP 2971989 A1 | 20-01-2016 |
| | | US 2014266755 A1 | 18-09-2014 |
| | | US 2017336091 A1 | 23-11-2017 |
| | | WO 2014144446 A1 | 18-09-2014 |
| US 2009056649 A1 | 05-03-2009 | NONE | |
| US 2018373234 A1 | 27-12-2018 | US 2018373234 A1 | 27-12-2018 |
| | | US 2021223768 A1 | 22-07-2021 |
| | | US 2021223769 A1 | 22-07-2021 |
| US 2004128111 A1 | 01-07-2004 | NONE | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140222366 A
- EP 3117566 A
- US 9638436 B